(19) **Europäisches Patentamt**

**European Patent Office**

**Office européen des brevets**

(11) **EP 0 813 324 A1**

(12) **EUROPÄISCHE PATENTANMELDUNG**

(43) Veröffentlichungstag:
17.12.1997 Patentblatt 1997/51

(51) Int. Cl.$^6$: **H04L 12/10**, H04L 12/403,
H04L 25/02

(21) Anmeldenummer: 96109448.9

(22) Anmeldetag: 13.06.1996

(84) Benannte Vertragsstaaten:
BE CH DE ES FR GB IT LI NL

(71) Anmelder: CERBERUS AG
CH-8708 Männedorf (CH)

(72) Erfinder: Stierli, Peter
8712 Stäfa (CH)

(54) **Serieller Datenbus und dessen Verwendung**

(57)     Der Bus mit einer Zweidrahtleitung (2, 3) und einer Mehrzahl von Busknoten (4) dient zum Austausch von Datentelegrammen zwischen den Busknoten (4) und einer an den Bus angeschlossenen Zentrale (1) und umgekehrt und zur Stromversorgung der Knoten (4). Konflikte zwischen gleichzeitig auftretenden Datentelegrammen werden anhand von deren Priorität gelöst. Der Bus ist in der Art eines Multimastersystem ausge-bildet, bei welchem jeder Knoten (4) und die Zentrale (1) ein Master ist und die Zentrale (1) den Bustakt liefert und die Synchronisation des Busses steuert. Jede Bit-übertragung ist in eine positive und eine negative Phase aufgeteilt, wobei in der positiven Phase die Stromversorgung der Knoten (4) und in der negativen Phase die Datenübertragung erfolgt.

Der Bus wird vorzugsweise für ein Gefahrenmelde-system verwendet, wobei die Knoten (4) einen Mikro-controller (9) aufweisen und entweder durch spezielle Melder mit integriertem Bus gebildet sind oder ein Inter-face zum Anschluss der Melder aufweisen. Busprotokoll und Bustiming werden so auf die Mikrocontroller abge-stimmt, dass diese die Busbedienung übernehmen kön-nen.

FIG.1

**Beschreibung**

Die vorliegende Erfindung betrifft einen seriellen Datenbus mit einer Zweidrahtleitung und mit einer Mehrzahl von Busknoten, für den Austausch von Datentelegrammen zwischen den Busknoten und einer an den Bus angeschlossenen Zentrale und umgekehrt und für die Stromversorgung der Knoten, wobei Konflikte zwischen gleichzeitig auftretenden Datentelegrammen anhand von deren Priorität gelöst werden.

Derartige serielle Datenbusse sind in vielen Ausführungen bekannt. Eines der bei solchen Bussen zu lösenden Probleme besteht darin, eine möglichst kurze Reaktionszeit auf Daten der Knoten sicherzustellen, was in der Regel durch eine entsprechend hohe Bitrate erreicht wird. Da aber jede Erhöhung der Bitrate zu einer Erhöhung der Kosten des Bussystems führt, ist diese Lösung nicht allgemein anwendbar. Bei Ausbildung eines solchen Busses mit einer Vielzahl von Knoten ergibt sich die Forderung der Möglichkeit des Transports von relativ hohen Strömen auf dem Bus, um an die Zentrale möglichst viele Knoten anschliessen zu können. Diese Forderung konnte bisher nicht zufriedenstellend gelöst werden, so dass bis heute Zweidrahtbusse nur in Systemen mit einer beschränkten Anzahl von Knoten oder mit nur sehr wenig Strom verbrauchenden Knoten eingesetzt werden.

Durch die Erfindung soll nun ein Bus der eingangs genannten Art angegeben werden, der sich durch geringe Hardwareanforderungen an die Knoten auszeichnet, damit ein tiefer Knotenpreis und damit geringe Kosten für den gesamten Bus erreicht werden können, und der ausserdem den Transport relativ hoher Ströme ermöglicht.

Diese Aufgabe wird erfindungsgemäss dadurch gelöst, dass der Bus in der Art eines Multimastersystems ausgebildet ist, bei welchem jeder Knoten und die Zentrale ein Master ist und die Zentrale den Bustakt liefert und die Synchronisation des Busses steuert, und dass jede Bitübertragung in eine positive und eine negative Phase aufgeteilt ist, wobei in der positiven Phase die Stromversorgung der Knoten und in der negativen Phase die Datenübertragung erfolgt.

Eine erste bevorzugte Ausführungsform des erfindungsgemässen Busses ist dadurch gekennzeichnet, dass die Knoten und die Zentrale Mittel zum Umschalten zwischen Stromversorgung und Datenübertragung aufweisen, und dass diese Mittel vorzugsweise durch Dioden gebildet sind.

Eine zweite bevorzugte Ausführungsform des erfindungsgemässen Busses ist dadurch gekennzeichnet, dass die Datentelegramme ein ereignisgetriebenes, priorisiertes Protokoll aufweisen.

Das Multimasterkonzept zusammen mit dem ereignisgetriebenen, priorisierten Protokoll erlaubt kleine Reaktionszeiten trotz niedriger Bitrate, also geringen Kosten. Die Aufteilung der Bitübertragungen in eine positive und eine negative Phase, wobei in der einen Phase die Stromversorgung der Knoten und in der anderen die Datenübertragung erfolgt, ermöglicht den Transport relativ hoher Ströme auf dem Bus.

Die Erfindung betrifft weiter eine Verwendung des genannten Datenbusses für ein aus einer Zentrale und aus an diese angeschlossenen Meldern bestehendes Gefahrenmeldesystem. Diese Verwendung ist dadurch gekennzeichnet, dass jeder Knoten einen Mikrocontroller und ein Interface zum Anschluss eines Melder aufweist. Alternativ sind die Knoten durch Melder mit einem Mikrocontroller und mit integriertem Bus gebildet.

Eine bevorzugte Ausführungsform der erfindungsgemässen Verwendung ist dadurch gekennzeichnet, dass Busprotokoll und Bustiming so auf die Mikrocontroller abgestimmt sind, dass diese die Busbedienung mitübernehmen können.

Der erfindungsgemässe Bus ist für Gefahrenmeldesysteme besonders gut geeignet, weil wegen der niedrigen Bitrate der Bus sehr lang sein und viele Knoten aufweisen kann. Ausserdem ermöglicht der erfindungsgemässe Bus eine beliebige Topolgie und er ist auch sehr einfach zu installieren.

Im folgenden wird die Erfindung anhand eines Ausführungsbeispiels und der Zeichnungen näher erläutert; es zeigt:

Fig. 1      ein Blockschaltbild eines erfindungsgemässen Busses mit Knoten und Zentrale;

Fig. 2      ein Diagramm der verschiedenen Schaltzustände des Busses; und

Fig. 3      eine Darstellung des Datenformats der Telegramme.

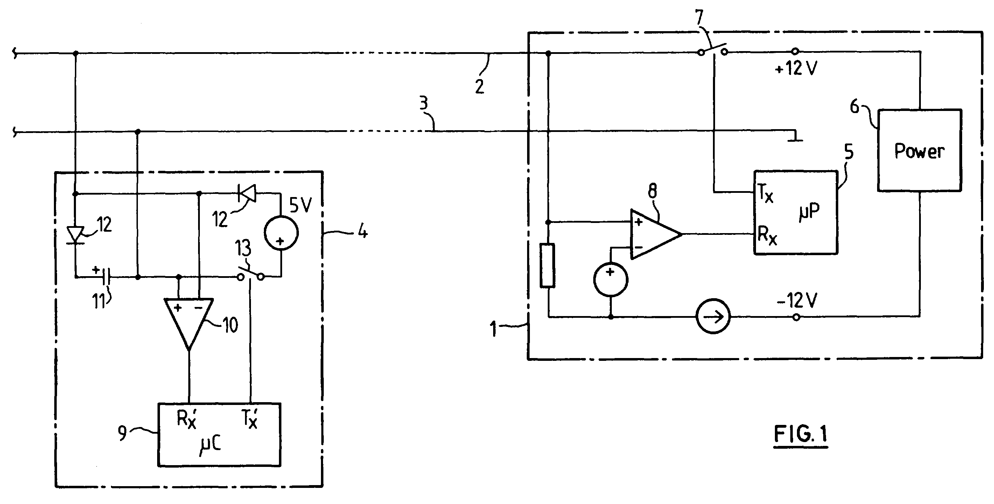

In Fig. 1 ist der prinzipielle Aufbau des erfindungsgemässen Busses dargestellt, der im wesentlichen aus einer an eine Zentrale 1 angeschlossenen Zweidrahtleitung 2, 3 und aus einer Mehrzahl von Busknoten 4 besteht. Die Zentrale 1 ist vorzugsweise eine Gefahrenmeldezentrale, also die Hauptbedienungsstation einer Intrusions- oder Brandmeldeanlage zur Erfassung von Alarmmeldungen (im Fall einer Intrusionsmeldeanlage auch von Sabotagemeldungen) der an die Zentrale angeschlossenen Melder und zur Steuerung der Programmierung der angeschlossenen Anzeige-, Alarmierungs und Fehlalarmierungseinrichtungen. Die Mittel zur Ausführung dieser Funktionen, die als bekannt vorausgesetzt werden, sind in der Zentrale 1 durch einen Mikroprozessor 5 symbolisiert, der unter anderem einen Ausgang $T_x$ und einen Eingang $R_x$ aufweist, die mit der Zweidrahtleitung 2, 3 verbunden sind. Die Zweidrahtleitung 2, 3 ist ausserdem an eine Stromversorgung 6 angeschlossen, die zur Versorgung der Knoten 4 mit elektrischem Strom dient.

Ein Knoten 4 kann entweder ein Interface zu einem angeschlossenen Melder aufweisen, oder er kann durch einen speziellen Melder mit integriertem Bus gebildet sein. Wesentlich ist in beiden Fällen, dass die Knoten 4 einen Mikrocontroller 9 enthalten. Der Ausdruck Knoten bezeichnet in der folgenden Beschreibung immer auch einen Melder.

Die Zentrale 1 liefert sowohl den Bittakt als auch die Synchronisation für die Datentelegramme auf dem Bus. Ein solches Datentelegramm ist eine Bitfolge von einem Knoten 4 zur Zentrale 1 oder umgekehrt; es enthält Prioritätsbits, Steuerbits, Adressbits und gegebenenfalls Datenbits. Die Übertragungszeit eines nachfolgend als Bitzelle bezeichneten Bits beträgt 6.144 ms, was eine Bitrate von etwa 160 Baud ergibt.

Darstellungsgemäss kann entweder eine positive oder eine negative Spannung von 12 V auf die Zweidrahtleitung 2, 3 gegeben werden, wobei die Auswahl der Polarität durch den Mikroprozessor 5 gesteuert ist. Letzteres ist in der Figur durch einen über eine mit dem Ausgang $T_x$ des Mikroprozessors 5 verbundene Leitung gesteuerten Schalter 7 angedeutet. Bei geschlossenem Schalter 7 wird die positive und bei offenem Schalter 7 die negative Spannung auf die Zweidrahtleitung 2, 3 gegeben. Bei positiver Spannung auf der Zweidrahtleitung 2, 3 fliesst Strom von der Zentrale 1 zu den Knoten 4. Dieser Strom, der in den Knoten 4 gleichgerichtet wird, kann bis zu 1 A betragen. Bei negativer Spannung auf der Zweidrahtleitung 2, 3 erfolgt die Datenübertragung zwischen den Knoten 4 und der Zentrale 1, welche dann die Charakteristik einer Stromsenke von 20 mA hat.

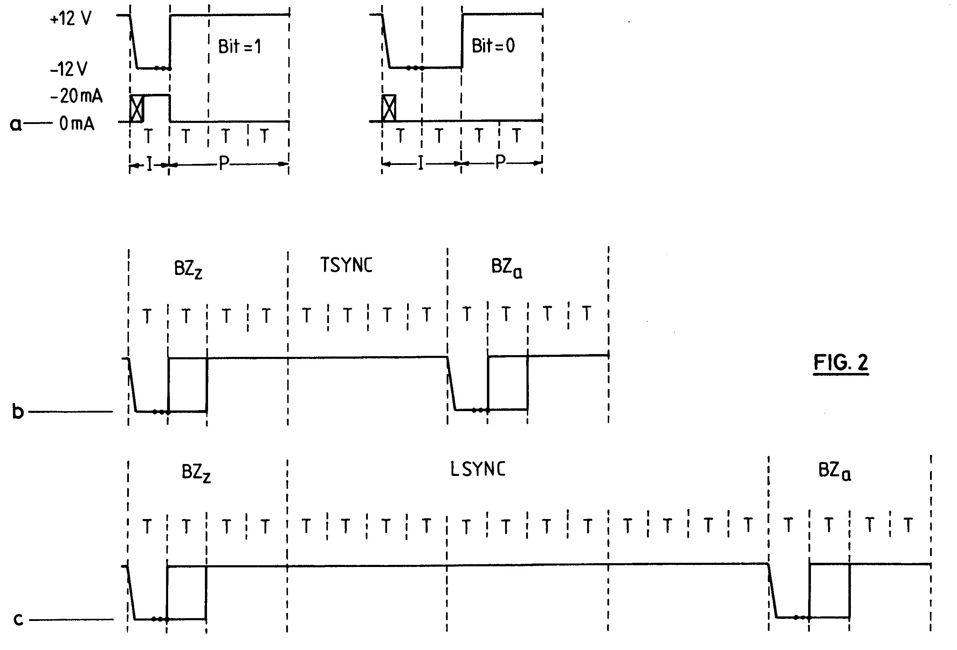

Die Datenübertragung erfolgt durch einen gepulsten Strom auf dem entsprechenden logischen Pegel. Fig. 2 zeigt in Zeile a ein Bit mit dem Wert 1 und ein Bit mit dem Wert 0 und in den Zeilen b und c zwei Synchronisationsbedingungen. In der Figur sind jeweils beim ersten Impuls der Bitzellen in Zeile a und beim ersten Impuls der jeweils ersten und letzten Bitzelle $BZ_a$ bzw. $BZ_z$ im Telegramm (Zeilen b und c) die Stromimpulse durch Punkte markiert.

Aus Zeile a von Fig. 2 ist ersichtlich, dass eine Bitzelle von 6.144 ms Dauer aus vier Impulsen der Dauer T von je 1.536 ms (= 3mal 0.512 ms) besteht. Zeile a zeigt oben die Spannung auf der Zweidrahtleitung 2 und unten den Strom von den Knoten 4 zur Zentrale 1. Auf der Abszisse ist die Ladephase P (Strom zu den Meldern) und die Phase I der Stromantwort von den Meldern eingetragen. Die Dauer von P ist immer grösser als diejenige von I. In der linken Hälfte von Zeile a ist ein Bit mit dem logischen Wert (Pegel) 1 eingezeichnet, in der rechten Hälfte ein solches mit dem Wert 0.

Ein Knoten 3, der ein Datentelegramm an die Zentrale 1 senden will, legt ein Stromsignal auf die Zweidrahtleitung 2, 3. Dieses wird von der Zentrale 1 gemessen und bei 20 mA begrenzt. Ein dem Eingang $R_x$ des Mikroprozessors 5 vorgeschalteter Komparator 8 misst diesen Strom und bestimmt daraus den logischen Pegel 0 oder 1; ein Strom von 20 mA ergibt den Pegel 1 und ein Strom unterhalb dieses Werts ergibt den Pegel 0. In der Zeit der Negativphase steckt auch die Information für die Knoten über das angelegte Bit, wobei die Dauer der Negativphase davon abhängt, ob ein Strom von 20 mA fliesst oder nicht. Wenn ein solcher Strom fliesst, dann ist die Länge der Negativphase gleich T (Zeile a, links), wenn kein Strom fliesst, dann ist sie gleich 2mal T (Zeile a, rechts). Auf die negative Phase folgt dann wieder eine positive Ladephase.

Die unterschiedliche Länge der Negativphase in Abhängigkeit davon, ob in der Zentrale 1 ein Strom von 20 mA gemessen wird oder nicht, gestattet die für eine Prioritätsentscheidung zwischen verschiedenen Datentelegrammen (Arbitration) nötige "Sicht" der Knoten. Das bedeutet mit anderen Worten, dass der Strom, den ein Knoten zieht, zwar nur von der Zentrale bemerkt, dass aber die Spannungsantwort der Zentrale von allen Knoten gesehen wird.

Die Knoten 4, die als T-Stücke an die Zweidrahtleitung 2, 3 geschaltet sind, was eine beliebige Topologie des Busses ermöglicht, enthalten neben dem Mikrocontroller 9 im wesentlichen einen Komparator 10 zur Bestimmung der logischen Pegel der einzelnen Bits der empfangenen Datentelegramme, einen Stützkondensator 11, als Schalter wirkende Dioden 12 und einen vom Mikrocontroller 9 gesteuerten Schalter 13. Bei geschlossenem Schalter 13 ist der negative Zweig im Knoten 4 kurzgeschlossen und dieser kann ein Bit mit Pegel 1 auf die Zweidrahtleitung 2, 3 legen. Darstellungsgemäss weist der Mikrocontroller 9 einen Eingang $R_x$' und einen Ausgang $T_x$' auf.

Durch die Trennung von positiver Speisephase und negativer Bittransferphase sind in den Knoten 4 nur Dioden als Schalter nötig und die Anforderungen an die zeitliche Auflösung des Knotenprozessors (Mikrocontroller 9) sind gering. Dieses nicht allzustrenge Timing hat den Vorteil, dass die Timingsanforderungen des Protokolls durch die Mikrocontroller 9 im Hintergrund bewältigt werden können. Die Synchronisation der Datentelegramme erfolgt mit zusätzlich eingefügten rein positiven Phasen. Bei eingeschwungenem Bus, also wenn die Stützkondensatoren 11 der Knoten 4 geladen sind, ziehen die Knoten im Spannungsbereich zwischen -5 V und +5 V keinen Strom, wodurch ein sauberer lastfreier Übergang der Busspannung durch diesen Bereich gewährleistet ist.

Die Zentrale 1 erzeugt zusätzlich zu den schon genannten Daten zwei verschiedene, in den Zeilen b und c von Fig. 2 dargestellte Synchronisationsbedingungen TSYNC und LSYNC. TSYNC erzwingt den Start des nächsten Telegramms und LSYNC erzwingt den Neustart einer Melderlinie. Darstellungsgemäss ist das Signal TSYNC durch eine Bitzelle mit dem Pegel 1 und das Signal LSYNC durch drei Bitzellen mit dem Pegel 1 gebildet. Im installierten Zustand und bei ereignisloser Melderlinie generiert jeder Knoten 4 nach einem LSYNC ein Telegramm, welches seine Adresse im Arbitrationsfeld, das ist der zur Bestimmung der Priorität verwendete Teil des Datentelegramms, enthält.

Ein Knoten, der im Arbitrationsfeld ein rezessives Bit setzt, das ist ein Bit, das unterdrückt werden kann, und ein dominantes Bit liest, muss sich für den Rest des Telegramms vom Bus zurückziehen und hat die Arbitration verloren. Dominant auf dem Bus ist eine logische 1; dementsprechend ist eine logische 0 rezessiv. Oder anders ausgedrückt: Eine 1 wird gegen eine 0 immer die Arbitration gewinnen. Nach Erkennen der TSYNC Bedingung melden sich alle Knoten, die noch nicht gewonnen haben erneut, bis auch der letzte Knoten gewonnen hat. Knoten, die gewonnen haben, dürfen sich erst nach einer erneuten LSYNC Bedingung wieder melden, es sei denn, sie haben ein Ereignis mit höherer Priorität zu melden.

Jeder Busknoten 4 enthält eine eindeutige 32-Bit Nummer, mit der er sich nach seiner Installation anmeldet. Diese Nummer, die spezielle Adressschalter an den Knoten überflüssig macht, ist in einem ROM des Knotens gespeichert und wird nach dem ersten Anschalten des Knotens oder nach einem Reset verwendet. Die Zentrale 1 kann einen Knoten mit der genannten 32-Bit Nummer ansprechen und ihm im gleichen Telegramm eine von ihr zugeordnete 8 Bit lange Kurzadresse übermitteln. Der so angesprochene Knoten meldet sich in der Folge mit dieser Kurzadresse, was ein sehr viel kompakteres Protokoll auf dem Bus ermöglicht.

Ebenso gibt jeder Knoten nach seiner Installation seine Typenkennung ab, so dass die Zentrale über die Fähigkeiten dieses Knotens und über das Format und die Bedeutung seiner Daten in den Telegrammen informiert ist. Daten können erst nach Vergabe der Kurzadresse ausgetauscht werden. Auch nach Vergabe der Kurzadresse kann aber der Knoten jederzeit mit der 32-Bit Adresse angesprochen werden; bei einem durch einen Fehler verursachten Knotenreset muss sogar die 32-Bit Adresse verwendet werden, um den Knoten ansprechen zu können. Dieser Mechanismus kann auch dazu verwendet werden, durch periodische Änderung der Kurzadressen die Sicherheit von Gefahrenmeldeanlagen zu erhöhen.

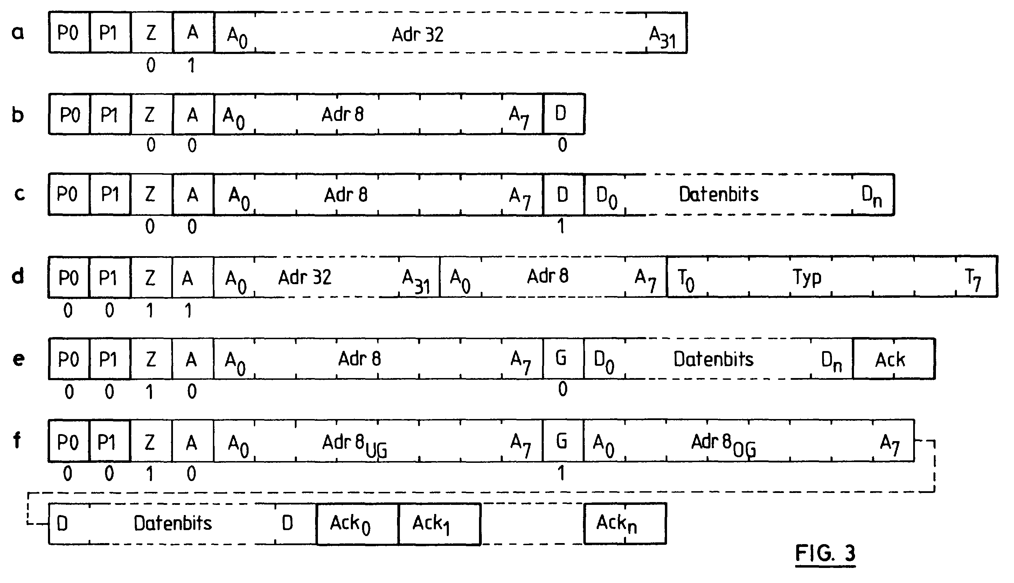

Fig. 3 zeigt das Datenformat der Telegramme anhand von typischen Buszuständen. In der Figur sind von der Zentrale bestimmte Bits dünn und vom Busknoten bestimmte Bits stark umrandet. Die einzelnen Zeilen von Fig. 3 zeigen folgende Telegramme:

Zeile a:  Telegramm, mit dem sich ein Knoten nach einem Reset mit seiner individuellen, 32 Bit langen Adresse meldet.
Zeile b:  Telegramm für die Übertragung der Anwesenheit eines Knotens (ohne Daten).
Zeile c:  Telegramm mit Datenübertragung von einem Knoten zur Zentrale.
Zeile d:  Telegramm, mit dem die lange 32-Bit Adresse eines Knotens durch eine kurze 8-Bit Adresse ersetzt und nach dem Knotentyp gefragt wird.
Zeile e:  Telegramm mit Datenübertragung von der Zentrale zu einem Knoten.
Zeile f:  Datenübertragung von der Zentrale zu einer Gruppe von Knoten, deren 8-Bit Adressen zwischen einer angegebenen unteren und oberen Begrenzung liegen.

Nachfolgend soll nun das Datenformat beschrieben werden: Die ersten beiden Bits P0 und P1 sind die Prioritätsbits, welche vier Prioritätsstufen kodieren. Bei ereignislosem Bus, wenn die Knoten nur ihre Anwesenheit melden, sind die Prioritäsbits beide null. Das nächste Bit Z ist das Zentralen- oder Richtungsanzeigebit des Busses. Wenn die Zentrale ein Telegramm zu einem Knoten senden will, dann setzt sie dieses Bit auf eins, Knotentelegramme lassen das Bit Z auf null. Das folgende Bit A ist das Adressmodebit; A gleich eins bedeutet, dass eine 32-Bit Adresse, und A gleich null bedeutet, dass eine 8-Bit Adresse folgt.

Diese vier Bits P0, P1, Z und A bilden zusammen mit den folgenden Adressbits das Arbitrationsfeld, wobei die Priorität durch die Reihenfolge dieser Bits bestimmt ist. Ein Telegramm das gegenüber den Mitbewerbern früher eine dominante Eins aufweist, ist immer dominant. Mit Hilfe der Prioritätsbits P0 und P1 lässt sich nach dem nächsten TSYNC immer ein Telegramm absenden, wenn man P0 und/oder P1 gleich 1 setzt. Ein Telegramm von der Zentrale mit Z=1 überschreibt alle Telegramme mit der Priorität P0=0, P1=0 und eine 32-Bit Adresse mit A=1 ist dominant gegenüber einer 8-Bit Adresse. Nach dem Adressmodebit A entscheidet dann der Adresswert selbst. Wie schon erwähnt wurde, können Datenbits nur an ein Telegramm mit einer 8-Bit Adresse gekoppelt werden.

Für die Datenübermittlung wird je nach Richtung wie folgt unterschieden: Telegramme von einem Knoten zur Zentrale weisen nach dem Adressfeld ein Datenvorhandensein-Bit D auf, welches angibt, ob Daten folgen. D=0 bedeutet, dass keine Daten folgen, und D=1 zeigt an, dass Daten (in Anzahl und Bedeutung gemäss Knotentyp) folgen. Da Telegramme von der Zentrale zu einem oder mehreren Knoten immer Daten aufweisen, weil sie sonst sinnlos wären, benötigen diese Telegramme kein Datenvorhandensein-Bit. Hier folgt nach dem Adressfeld ein Gruppenbit G, welches das gemeinsame Ansprechen einer Gruppe von Knoten ermöglicht, deren Adressen innerhalb einer im Telegramm angegebenen unteren und oberen Grenze liegen. G=0 bedeutet, dass keine Gruppe angesprochen wird und dass die Datenbits folgen. G=1 bedeutet, dass eine Gruppe angesprochen wird, wobei die vorangegangene Adresse die untere Gruppenbegrenzung bedeutet, und dass noch eine Adresse für die obere Gruppenbegrenzung folgt und erst nach dieser die Daten.

Bei Datentelegrammen von der Zentrale zu den Knoten erzeugen die letzteren am Telegrammende ein Acknowledgesignal zur Bestätigung des Empfangs. Dieses besteht aus zwei Bits, von denen immer eines dominant gleich eins ist, um auf dem Bus sichtbar zu sein. Ausserdem kodiert das Acknowledgesignal die Parität der vorangegangenen Telegrammbits. Ein Acknowledgesignal des Formats 10 bedeutet, dass das Telegramm eine ungerade und ein Acknowledgesignal 01 bedeutet, dass es eine gerade Anzahl von Einsen aufweist. Ein Acknowledgesignal ll bezeichnet ein zweites identisches Telegramm innerhalb des Empfangs-Zeitfensters.

Bei einem gruppenweisen Datentransfer geben die Knoten ihr Acknowledgesignal nacheinander auf den Bus, wobei die Position des Acknowledgesignals den Abstand der jeweiligen Knotenadresse von der unteren Gruppengrenze angibt. Beim Telegramm von Fig. 3, Zeile f, ist die untere Gruppengrenze mit Adr $8_{UG}$ und die obere Gruppengrenze mit Adr $8_{OG}$ bezeichnet. Entsprechend werden von den Knoten nacheinander n+1 Acknowledgesignale $Ack_0$ bis $Ack_n$ auf den Bus gegeben, wobei das Signal $Ack_n$ vom Knoten an der oberen Gruppengrenze stammt; dabei gilt: $Ack_n = Adr\,8_{OG} - Adr\,8_{UG}$. Wenn eine Gruppe Lücken in den Adressen hat, dann bedeutet ein fehlendes Acknowledgesignal eine fehlende Knotenadresse in der Reihe.

Von den Knoten ausgelöste Telegramme werden nach ungefähr 1 s identisch wiederholt. Zudem kann die Zentrale den Zustand eines Knotens jederzeit abfragen. Die Zentrale muss ihre Telegramme ebenfalls innerhalb eines bestimmten Zeitintervalls, vorzugsweise innerhalb von 255 Bitzeiten, wiederholen, damit es von den Knoten akzeptiert wird. Die Knoten geben auf das erste Telegramm das paritätskodierte Acknowledgesignal 01 oder 10 zurück und auf das zweite Telegramm, falls es mit dem ersten identisch ist, das Acknowledgesignal 11 zur Bestätigung der Übernahme.

Der vorstehend beschriebene Bus zeichnet sich durch folgende Merkmale und Eigenschaften aus:

- geringe Kosten
- Zweidrahtleitung
- Transport hoher Ströme (0.5 A Mittelwert pro Zweidrahtleitung)
- bidirektionale Datenübermittlung
- beliebige Topologie
- Möglichkeit von 255 Knoten pro Linie
- Buslänge grösser als 1 km
- einfache Installation
- rasche Reaktion auf Telegramme von hoher Priorität.

**Patentansprüche**

1. Serieller Datenbus mit einer Zweidrahtleitung (2, 3) und mit einer Mehrzahl von Busknoten (4), für den Austausch von Datentelegrammen zwischen den Busknoten (4) und einer an den Bus angeschlossenen Zentrale (1) und umgekehrt und für die Stromversorgung der Knoten (4), wobei Konflikte zwischen gleichzeitig auftretenden Datentelegrammen anhand von deren Priorität gelöst werden, dadurch gekennzeichnet, dass der Bus in der Art eines Multimastersystem ausgebildet ist, bei welchem jeder Knoten (4) und die Zentrale (1) ein Master ist und die Zentrale (1) den Bustakt liefert und die Synchronisation des Busses steuert, und dass jede Bitübertragung in eine positive und eine negative Phase aufgeteilt ist, wobei in der positiven Phase die Stromversorgung der Knoten (4) und in der negativen Phase die Datenübertragung erfolgt.

2. Datenbus nach Anspruch 1, dadurch gekennzeichnet, dass die Knoten (4) und die Zentrale (1) Mittel zum Umschalten zwischen Stromversorgung und Datenübertragung aufweisen, und dass diese Mittel vorzugsweise durch Dioden (12) gebildet sind.

3. Datenbus nach Anspruch 2, dadurch gekennzeichnet, dass die Datentelegramme ein ereignisgetriebenes, priorisiertes Protokoll aufweisen.

4. Datenbus nach Anspruch 2 oder 3, dadurch gekennzeichnet, dass die Knoten (4) als T-Stücke an den Bus geschaltet sind.

5. Datenbus nach Anspruch 4, dadurch gekennzeichnet, dass die Datenübertagung zwischen Zentrale (1) und Knoten (4) in Form von Spannungsimpulsen und zwischen Knoten (4) und Zentrale (1) in Form von Stromimpulsen erfolgt, wobei der Pegelwert der jeweiligen Informationsbits im ersten Fall durch die Dauer der Spannungsimpulse und im zweiten Fall durch die Stärke der Stromimpuls bestimmt ist.

6. Datenbus nach Anspruch 5, dadurch gekennzeichnet, dass die Zentrale (1) und die Knoten (4) je einen Komparator (8 bzw. 10) zur Bestimmung des logischen Pegels der empfangenen Bits enthalten.

7. Datenbus nach einem der Ansprüche 2 bis 6, dadurch gekennzeichnet, dass die Datentelegramme Prioritätsbits (P0, P1), Steuerbits (Z, A, G), Adressbits (A0-A7, A0-A31) und optional Datenbits (D0-Dn) enthalten.

8. Datenbus nach Anspruch 7, dadurch gekennzeichnet, dass die ersten vier Bits jedes Datentelegramms durch zwei Prioritätsbits (P0, P1), ein Zentralenbit (Z) zur Richtungsanzeige und ein Adressmodebit (A) gebildet sind, und dass diese Bits zusammen mit den folgenden Adressbits (A0-A7, A0-A31) ein Arbitrationsfeld zur Bestimmung der Priorität des Datentelegramms bilden.

9. Datenbus nach Anspruch 8, dadurch gekennzeichnet, dass ein Bit mit dem Wert eins gegenüber einem mit dem Wert null dominiert und dass die Priorität der Datentelegramme durch die Reihenfolge der dominanten Bits bestimmt ist wobei dasjenige Datentelegramm Priorität geniesst, welches an einer niedrigeren Stelle als die anderen ein dominantes Bit aufweist.

10. Verwendung des Datenbusses nach einem der Ansprüche 1 bis 9 für ein aus einer Zentrale (1) und aus an diese angeschlossenen Meldern bestehendes Gefahrenmeldesystem, dadurch gekennzeichnet, dass jeder Knoten (4) einen Mikrocontroller (9) und ein Interface zum Anschluss eines Melders aufweist

11. Verwendung des Datenbusses nach einem der Ansprüche 1 bis 9, dadurch gekennzeichnet, dass die Knoten (4) durch Melder mit einem Mikrocontroller (9) und mit integriertem Bus gebildet sind.

12. Verwendung nach Anspruche 10 oder 11, dadurch gekennzeichnet, dass Busprotokoll und Bustiming so auf die Mikrocontroller (9) abgestimmt sind, dass diese die Busbedienung übernehmen können.

FIG.1

FIG. 2

+12 V
−12V
−20mA
0 mA
a

Bit = 1

Bit = 0

P

P

TSYNC

$BZ_z$    $BZ_a$

b

LSYNC

$BZ_z$    $BZ_a$

c

a   | P0 | P1 | Z | A | $A_0$     Adr 32     $A_{31}$

      0   1

b   | P0 | P1 | Z | A | $A_0$   Adr 8   $A_7$ | D |

      0   0              0

c   | P0 | P1 | Z | A | $A_0$   Adr 8   $A_7$ | D | $D_0$   Datenbits   $D_n$

      0   0              1

d   | P0 | P1 | Z | A | $A_0$   Adr 32   $A_{31}$ | $A_0$   Adr 8   $A_7$ | $T_0$   Typ   $T_7$

      0   0   1   1

e   | P0 | P1 | Z | A | $A_0$   Adr 8   $A_7$ | G | $D_0$   Datenbits   $D_n$ | Ack

      0   0   1   0                0

f   | P0 | P1 | Z | A | $A_0$   Adr $8_{UG}$   $A_7$ | G | $A_0$   Adr $8_{OG}$   $A_7$

      0   0   1   0               1

| D |   Datenbits   | D | $Ack_0$ | $Ack_1$   $Ack_n$ |

FIG. 3

Europäisches
Patentamt

EUROPÄISCHER RECHERCHENBERICHT

Nummer der Anmeldung

EP 96 10 9448

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-5 347 515 (MARINO FRANCIS C) 13.September 1994 * das ganze Dokument * --- | 1-12 | H04L12/10 H04L12/403 H04L25/02 |
| A | DE-A-37 17 886 (ENGSTLER REINHARD) 22.Dezember 1988 * Spalte 3, Zeile 42 - Spalte 4, Zeile 35 * * Spalte 5, Zeile 51; Anspruch 61 * --- | 1-12 | |
| A | EP-A-0 306 934 (WILLEMIN ELECTRONIC S A) 15.März 1989 * Zusammenfassung * --- | 1-12 | |
| A | EP-A-0 134 174 (FRANCAIS DETECTION ELETR) 13.März 1985 * Zusammenfassung * --- | 1-12 | |
| A | US-A-4 907 222 (SLAVIK WILLIAM H) 6.März 1990 * Zusammenfassung * * Spalte 2, Zeile 24 - Zeile 39 * * Spalte 3, Zeile 49 - Zeile 68 * * Spalte 8, Zeile 43 - Zeile 50 * ----- | 1-12 | |

RECHERCHIERTE SACHGEBIETE (Int.Cl.6)

H04L

Der vorliegende Recherchenbericht wurde für alle Patentansprüche erstellt

| Recherchenort | Abschlußdatum der Recherche | Prüfer |
|---|---|---|
| DEN HAAG | 8.November 1996 | Mikkelsen, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P04C03)